(19) Europäisches Patentamt / European Patent Office / Office européen des brevets

(11) **EP 4 522 311 B1**

(12) **EUROPEAN PATENT SPECIFICATION**

(45) Date of publication and mention of the grant of the patent:
**03.06.2026 Bulletin 2026/23**

(21) Application number: **23727703.3**

(22) Date of filing: **25.04.2023**

(51) International Patent Classification (IPC):
**B01D 53/14** *(2006.01)*   **B01D 53/18** *(2006.01)*
**B01D 53/62** *(2006.01)*   **E02B 9/06** *(2006.01)*
**F03B 13/06** *(2006.01)*

(52) Cooperative Patent Classification (CPC):
**B01D 53/1475; B01D 53/1425; B01D 53/185;**
B01D 2252/103; B01D 2258/0283; F03B 17/06

(86) International application number:
**PCT/NO2023/050094**

(87) International publication number:
**WO 2023/219513 (16.11.2023 Gazette 2023/46)**

(54) **GAS SEPARATION METHOD AND SYSTEM**

GASTRENNUNGSVERFAHREN UND -SYSTEM

PROCÉDÉ DE SÉPARATION DE GAZ ET SYSTÈME

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **12.05.2022 NO 20220562**

(43) Date of publication of application:
**19.03.2025 Bulletin 2025/12**

(73) Proprietor: **Gudesen, Hans Gude**
**1639 Gamle Fredrikstad (NO)**

(72) Inventors:
• **NORDAL, Per-Erik**
**1387 Asker (NO)**
• **GUDESEN, Hans Gude**
**1639 Gamle Fredrikstad (NO)**

(74) Representative: **Acapo Onsagers AS**
**Edvard Griegs vei 1**
**5059 Bergen (NO)**

(56) References cited:
EP-A1- 2 928 585          EP-B1- 2 928 585
WO-A1-2022/015171     CN-A- 111 701 402
KR-A- 20160 035 791    US-A1- 2007 261 844

## Description

### Field of the invention

The present invention relates to methods for reducing the electrical energy requirements associated with gas/liquid solubility-based processes for selectively separating $CO_2$ gas from a mixture of gases, and systems for carrying out the methods. It also includes methods and systems for recovering the $CO_2$ that has been separated from the other gases.

### Background of the invention

Emissions of $CO_2$ into the atmosphere from human activities are generally acknowledged as a major unsolved problem both locally where concentrations of $CO_2$ may become high and cause acute damage to flora and fauna, and on a global scale where the background concentration of $CO_2$ in the air is steadily rising, causing global warming and destruction of marine habitats. To meet this challenge, great efforts have been spent worldwide to capture and dispose of $CO_2$, in particular from high volume point emitters such as fossil fueled power plants, cement factories and garbage incinerators. However, the technical solutions that have emerged so far are far from satisfactory. A prominent example is the amine process where $CO_2$ is separated from flue gases (see, e.g.: https://ccsnorway.com/capture-studies/) which is very energy consuming and expensive, and employs toxic chemicals.

Alternative schemes have been devised to extract CO2 from a mixture of gases by exploiting differences in their solubilities in water. While attractive in many respects, such schemes include gas/liquid injection and circulation processes that generally involve expenditure of electrical power in some form. In many cases the associated energy costs become prohibitive for successful implementation in industrial settings.

There is thus a pressing need to develop clean, low cost, high capacity solutions that are capable of extracting $CO_2$ from relevant gas mixtures without incurring large consumption of electrical energy and delivering the $CO_2$ in a form that facilitates long term sequestration or makes it suited as a feedstock in industrial processes.

The patent application KR 2016 0035791 A "Apparatus for Capturing Carbon Dioxide" relates to an apparatus for collecting carbon dioxide, which reduces energy required for collecting carbon dioxide and can reduce a discharge amount of carbon dioxide. The apparatus for collecting carbon dioxide comprises: a main boiler, a steam turbine, an absorbing tower, and a regeneration tower.

The patent EP 2 928 585 B1 "Method and System for Recovery of Carbon Dioxide from Gas" relates to a method for recovering carbon dioxide from gas where gas is pressurized, pressurized gas and water used as a solvent are fed to an absorption column, water received from the absorption column and carbon dioxide absorbed therein are fed to a desorption column, water exiting the desorption column is recirculated to the absorption column, carbon dioxide exiting the desorption column is recovered.

### Objects of the present invention

A general object of the present invention is to solve problems of technical solutions according to state of the art as described above.

An object is to contribute to improving solutions for capturing and disposing of $CO_2$ from flue gas as set forth in claims 1 and 10.

A more specific object is to provide solutions for clean, low cost, high capacity extracting of $CO_2$ from relevant gas mixtures without incurring large consumption of electrical energy.

### Summary of the invention

A first aspect of the invention is a method for separating CO2 gas from a gas mixture of CO2 and other gases, using a first and a second reservoir volume separated by a pressure transfer element. The method comprises the following steps:

- admitting the gas mixture into the first reservoir volume, and releasing gas from the second volume in a coordinated way;
- suspending the admitting and the releasing;
- generating steam under pressure, and admitting it into the second reservoir volume;
- transmitting pressure in the second reservoir volume to the first reservoir volume via the pressure transfer element, contributing to injecting gas mixture from the first reservoir volume into a volume of liquid, and forming bubbles therein; and

- dissolving in the volume of liquid a relatively larger proportion of CO2 gas than of the other gases in the bubbles, transporting gas remaining in the bubbles out of the volume liquid by allowing the bubbles floating to surface of the volume of liquid, thus separating CO2 gas from the gas mixture and giving CO2 enriched liquid.

Optionally, the generating of steam under pressure comprises exploiting thermal energy from a thermal source, where optionally, the thermal source comprises the gas mixture, and where further optionally, the generating of steam comprises heating liquid in a heat exchanger by the gas mixture.

Optionally, the method comprises passing the CO2 enriched liquid through a turbine eliciting flashing of dissolved CO2 into gas phase, generating energy, and producing degassed liquid, and further optionally, the method comprises collecting/removing the CO2 in gas phase.

Optionally, the method comprises gathering the degassed liquid in a reservoir and admitting the steam under pressure into the reservoir lifting the degassed liquid to a higher altitude, and optionally, it comprises returning the degassed liquid into the volume of liquid in a closed cycle operation. Optionally, the method comprises supplementing the degassed liquid with a smaller portion of liquid to compensate for evaporation losses.

The liquid is water, the volume of liquid is a water volume, the CO2 enriched liquid is CO2 enriched water, and the degassed liquid is degassed water.

The gas mixture is a flue gas.

Another aspect of the invention is a system for separating CO2 gas from a gas mixture of CO2 and other gases, where the system comprises:

- a first and a second reservoir volume separated by a pressure transfer element arranged to transfer pressure between the first and second reservoir volume;
- a volume of liquid with a surface, where the volume of liquid is fluidly connected to the first reservoir volume, and where the liquid has a higher solubility of CO2 than of the other gases;
- means for (controllably) injecting the gas mixture into the first reservoir volume, and means for in a coordinated way releasing gas from the second reservoir volume; and
- means for generating steam under pressure, and admitting it into the second reservoir volume, thereby via the pressure transfer element contributing to injecting gas mixture from the first reservoir volume into the volume of liquid, the volume of liquid being arranged for separating CO2 and the other gases by a relatively larger proportion of CO2 being dissolved in the liquid, and a relatively larger proportion of the other gases being transported in bubbles out of the liquid providing CO2 enriched liquid.

Optionally, the pressure transfer element comprises a hydraulic device which optionally comprises hydraulic liquid arranged in the first and second reservoir volumes being fluidly connected and allowing transfer of hydraulic liquid between the reservoir volumes.

Optionally, the pressure transfer element divides an enclosed volume into the first and second reservoir volumes and comprises a movable wall in the form of a piston or a membrane.

Optionally, the system comprises a turbine arranged for receiving the CO2 enriched liquid and eliciting flashing of dissolved CO2 into gas phase, generating energy, and producing degassed liquid.

Optionally, the system comprises a reservoir arranged for receiving the degassed liquid and admitting the steam under pressure into the reservoir lifting degassed liquid to a higher altitude, further optionally, the system comprises means for returning the degassed liquid into the liquid volume in a closed cycle operation.

Optionally, the means for generating steam under pressure comprises a heat exchanger arranged for receiving heat from the gas mixture.

**Description of the figures**

The above and further features of the invention are set forth with particularity in the appended claims and together with advantages thereof will become clearer from consideration of exemplary embodiments of the invention given with reference to the accompanying drawings.

Embodiments of the present invention will now be described, by way of example only, with reference to the following diagrams wherein:

- Figures 1a-e show a first embodiment of the present invention.
- Figures 2a-e show a second embodiment of the present invention.

## EP 4 522 311 B1

**Reference numbers to the figures**

The following reference numbers refer to the drawings:

| Number | Designation |
|--------|-------------|
| 1 | Flue gas |
| 2 | Tube |
| 3 | Water |
| 4 | Heat exchanger |
| 5 | Steam |
| 6 | First reservoir volume |
| 7 | Tube |
| 8 | Valve |
| 9 | Piston |
| 10a | First reservoir volume |
| 10b | Second reservoir volume |
| 11 | Second reservoir volume |
| 12 | Hydraulic liquid |
| 13 | Valve |
| 14 | Void space |
| 15 | Throttle valve |
| 16 | Valve |
| 17 | Valve |
| 18 | Dispersion device |
| 19 | Liquid |
| 20 | Column |
| 21 | Bubbles |
| 22 | Surface |
| 23 | Valve |
| 24 | Turbine |
| 25 | Volume |
| 26 | Venting tube |
| 27 | Gas |
| 28 | Liquid |
| 29 | Recipient |
| 30 | Valve |
| 31 | Reservoir |
| 32 | Reservoir |
| 33 | Valve |
| 34 | Valve |
| 35 | Void space |
| 36 | Riser tube |
| 37 | Water from riser tube |
| 38 | Returned water |
| 39 | Enclosed volume |

**Description of preferred embodiments of the invention**

The present invention employs differences in the solubility of gases in a liquid to obtain separation of gases in a gas mixture. This is achieved in a high throughput process where the gas mixture is brought into contact with the liquid across a large contact area, causing the gas species with the highest solubility to dominate gas transfer into the liquid phase. The remaining gas species with lower solubility are dissolved to a smaller degree and are subsequently separated out by mechanical means.

For concreteness, it shall be assumed in the following that the gas mixture is flue gas from a combustion process and that the liquid is water. Three species are of particular interest, namely $N_2$, $O_2$ and $CO_2$, whose relative concentrations in the mixture may be typically 70-80 %, 2,5-4 % and 1-25 %, respectively. Generally, it is desired to separate the $CO_2$ from the other gaseous species. The solubilities in water for these gases are very different, which is exploited in the present invention: Under equilibrium conditions and at 10° C and 1 bar partial pressure, the solubilities are respectively 0,019 g. $N_2$ gas per kg water, 0,057 g. $O_2$ gas per kg water, and 2,5 g. $CO_2$ gas per kg water. Thus, the solubility ratio is 44:1 between $CO_2$ and $O_2$ and 132:1 between $CO_2$ and $N_2$. At saturation, i.e. when the water has been exposed to the flue gas for a long time, e.g. by bubbling, it shall have absorbed relative amounts of $N_2$, $O_2$ and $CO_2$ that differ from the composition of the flue gas. The $CO_2$ component shall typically be strongly enhanced in the water: It involves dissolved molecular $CO_2$ as well as carbonic acid, bicarbonate and carbonate and their reactions with cations present in the water. If one assumes that $CO_2$ is a simple gas, one can apply Henry's law which can be written:

$$\text{Eq. 1} \qquad\qquad c_a = H^{cp}\, p_a$$

Here, $H^{cp}$ is the Henry solubility constant, $c_a$ is the concentration of a species in the aqueous phase under equilibrium conditions and $p_a$ is the partial pressure of that species in the gas phase.
When CO2 dissolves in water, the carbon enters a chain of interacting processes:

$$\text{Eq.2 } CO_2(gas) \leftrightarrow CO_2(liquid)$$

$$\text{Eq.3 } CO_2(liquid) + H_2O \leftrightarrow H_2CO_3$$

$$\text{Eq.4 } H_2CO_3 + H_2O \leftrightarrow H_3O^+ + HCO_3^-$$

$$\text{Eq.5 } HCO_3^- + H_2O \leftrightarrow H_3O^+ + CO_3^{2-}$$

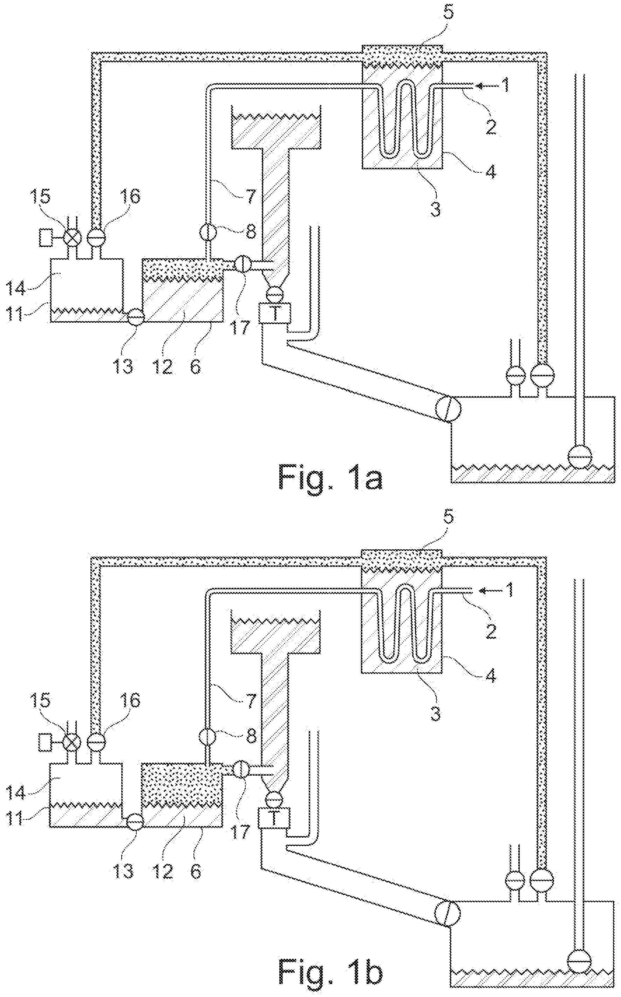

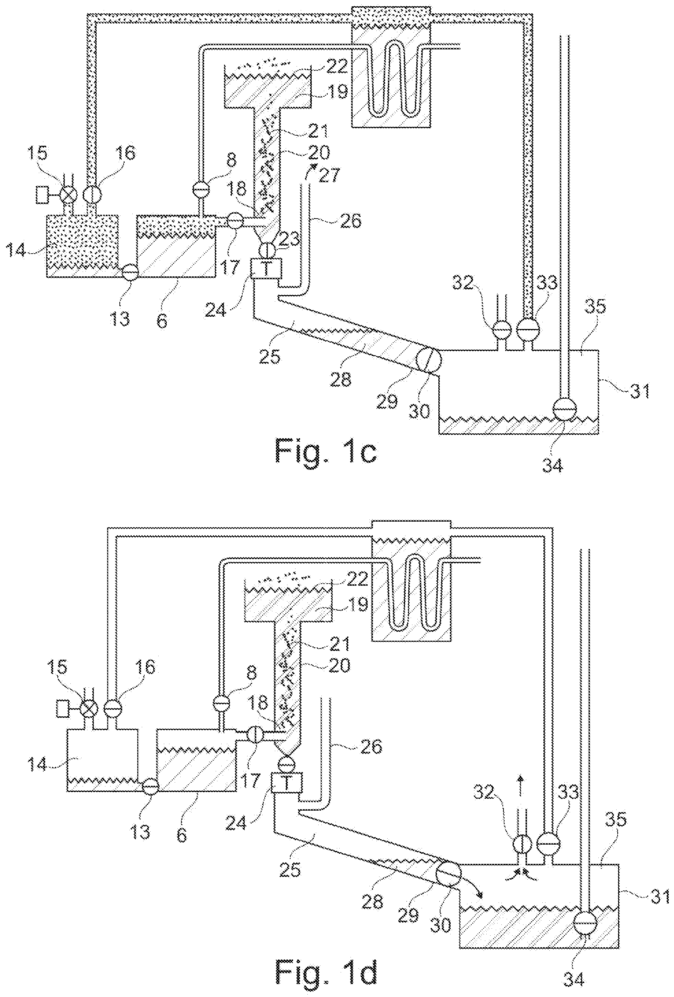

Here, $CO_2$ (liquid) is carbon dioxide in solvated form in the water, $H_2CO_3$ is carbonic acid, $HCO_3^-$ is bicarbonate and $CO_3^{2-}$ is carbonate. The relative concentrations of these species depends on the pH, with the dominant species at equilibrium and near-neutral pH being bicarbonate. The sum of these species is often referred to as dissolved inorganic carbon: DIC. The amount of DIC that can be absorbed in water depends on several factors, including the concentration and types of ionic species, as well as the temperature and $CO_2$ partial pressure. Thus, at 10 C and 1 bar $CO_2$ partial pressure, about 2,5 kg. of $CO_2$ can be accommodated in 1 $m^3$ of water. Many schemes can be devised to extract $CO_2$ from a mixture of gases by exploiting the solubility differentials in water. In practice, all of these involve expenditure of mechanical power in some form, in some cases to an extent where the associated energy costs become prohibitive. This is particularly notable in systems that employ electrical power to run pumps.
As shall be described below with reference to a first embodiment of the present invention illustrated in **Figs.1a-e,** it is possible to reduce or eliminate the need for externally supplied electrical power by exploiting the thermal energy content in the hot flue gas containing the $CO_2$ gas that is to be removed, or from any other thermal source.
The hot flue gas (1) is introduced via a tube (2) and delivers heat to water (3) in a heat exchanger (4), producing steam (5) under pressure. The steam is employed in a sequence of steps as illustrated in **Figs.1a-e** to provide mechanical energy for operating the $CO_2$ separation system.
The sequence starts as shown in **Fig.1a** where a first reservoir volume (6) is filled with flue gas via a tube (7) with valve (8) in open position. The flue gas is admitted via the valve (8) into the first reservoir volume (6) which is initially filled with water (12). The water is gradually displaced by the flue gas and transferred in a controlled manner to a second reservoir volume (11) via a communicating tube and valve (13). The water levels in the second reservoir volume (11) and in the first reservoir volume (6) approach a common level (cf. **Fig.1b**) in a process where filling of flue gas into the first reservoir volume is coordinated with release of gas from the void space (14) in the second reservoir volume through the throttle valve (15), with the valve (16) closed. In **Fig.1c** the throttle valve (15) is closed and valve (16) is open, admitting steam under pressure into the void space (14) above the water in the second reservoir volume (11). The pressure transmits into the first reservoir volume (6) via the communicating tube and valve (13). The valve (8) is now closed, and the flue gas in the first reservoir volume (6) is forced via the open valve (17) into a dispersion device (18) that injects flue gas into the water (19) in a vertical column (20). The injected gas forms bubbles (21) that float upwards in the column against downward flowing water. The constituent gases in the flue gas interact with the water: The gas transport out of the bubbles and into the water will differ between the gas species, reflecting differences in diffusivity and solubility in the water surrounding the bubble. This results in segregation of gas species where $CO_2$ which has the highest diffusivity and solubility is more easily transported into the water outside the bubble, while a larger proportion of the other gas species (e.g. $N_2$) remain inside the bubble and are transported out of the water volume when the bubble floats to the surface (22). Thus, a high degree of gas separation can be achieved by collecting the water with dissolved high solubility gas on the one hand and allowing the bubbles with the low solubility gas species to escape from the surface (22) on the other hand. Water is replenished at the top of the column and is enriched in dissolved $CO_2$ as it descends. Ultimately the $CO_2$ enriched water (19) passes through a valve (23) and a turbine (24) which generates electrical power W:

$$\text{Eq.6} \qquad\qquad W = V\rho g h_1$$

Here V is the volumetric flow rate of water, $\rho$ the average density of water in the column, g is the acceleration of gravity and $h_1$ the water column height. The water that passes through the turbine experiences a sudden pressure drop $\Delta P$:

$$\text{Eq.7} \qquad\qquad \Delta P = \rho g h_1$$

as it exits into the volume (25) below, which communicates with the ambient atmosphere via the venting tube (26). This elicits flashing of the dissolved $CO_2$ into the gas phase and the flashed $CO_2$ gas (27) exits through the venting tube (26). The degassed water (28) flows down into a recipient (29). At a point in time, water has displaced all the flue gas in the first reservoir volume (6), the valve (17) is closed and the gas injection into the column (20) ends. The valve (23) is closed after a delay that allows most of the remaining dissolved $CO_2$ in the column (20) to be collected in the recipient (29).

As can be recognized at this stage, $CO_2$ has been separated from the other flue gas components and brought into a water phase, energy has been generated in the turbine, water with the dissolved $CO_2$ has been degassed and the separated $CO_2$ (27) has been brought out of the system in a separate venting tube (26). Experiments and analysis have shown that this procedure can deliver a separation efficiency exceeding 97%.

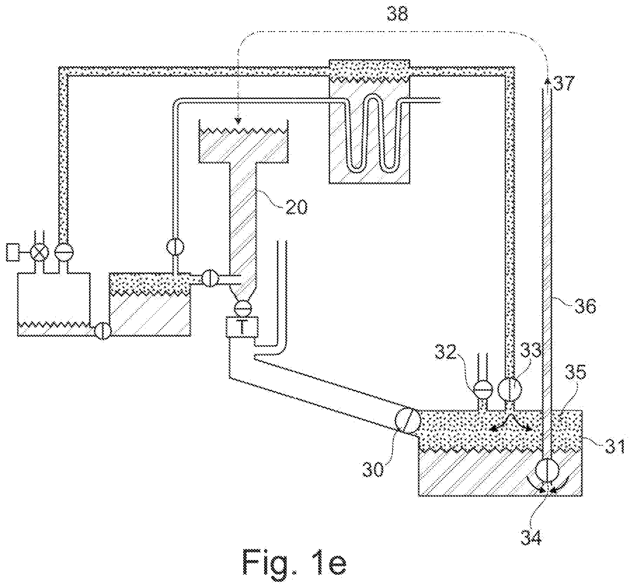

The embodiment shown in **Figs.1a-e** includes 2 procedures where thermal energy in the flue gas is exploited to perform mechanical work. In the first case, illustrated in **Figs.1a-c,** steam under pressure is used to inject flue gas into the water in the column (20), overcoming hydrostatic pressure and friction. In the second case, illustrated in **Figs.1d-e**, steam under pressure is used to lift degassed water from a low level to a higher level: In **Fig.1d,** the valve (30) is opened and degassed water in the recipient (29) flows into a lower reservoir (31). Displaced air from the void space above the water in the reservoir escapes via the open valve (32), while the valves (33), (34) are closed. In **Fig.1e,** valves (30) and (32) are closed and valves (33) and (34) are open. Steam under pressure flows into the void space (35), exerting a pressure on the water surface in the lower reservoir (31) and forcing water to enter the riser tube (36) and exit at the top (37). This opens up possibilities for closed cycle operation where water (37) emanating from the riser tube (36) is returned (38) to the top of the column (20), supplemented by a smaller amount of water added to compensate for evaporation losses. This removes the need for continuous access to large water resources.

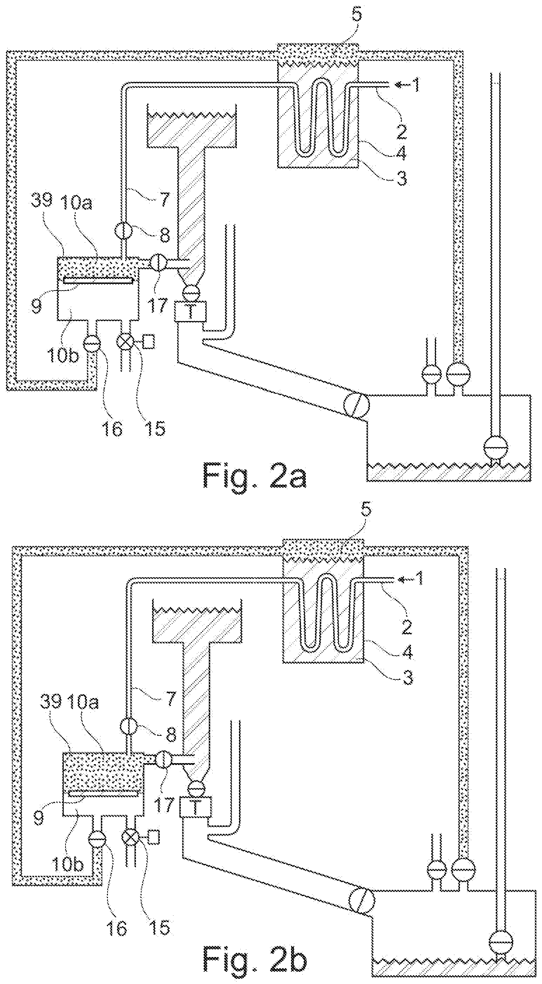

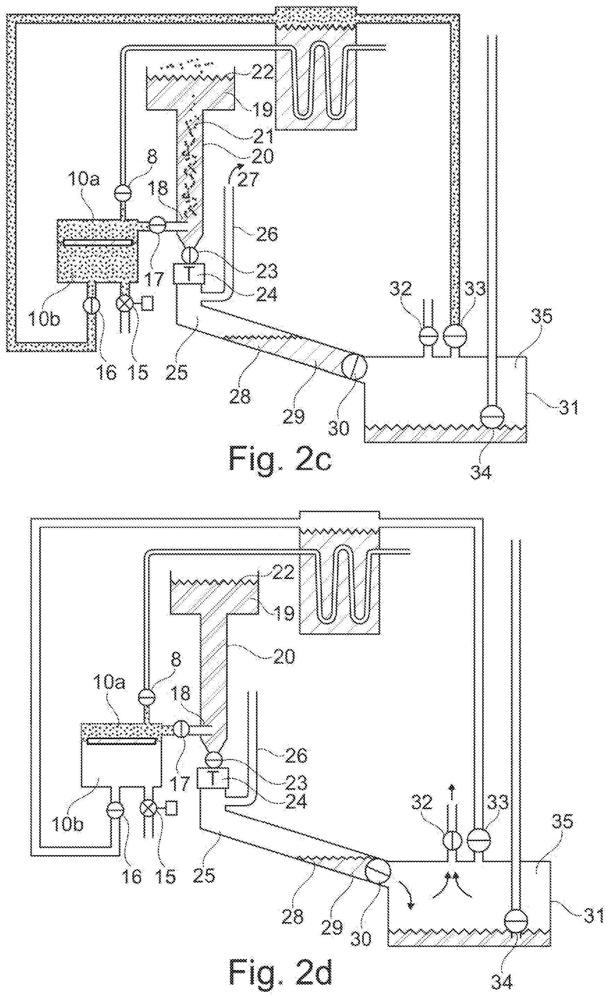

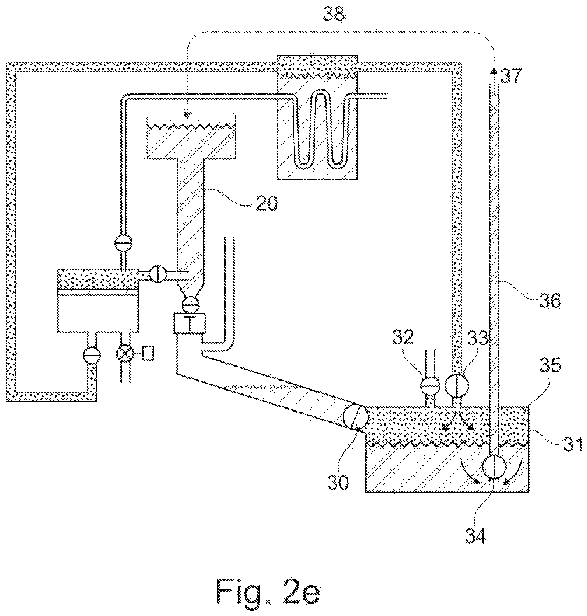

A second preferred embodiment is illustrated in **Figs.2a-e:** Instead of employing a hydraulic system (6), (11), (13) as a pressure transfer element as described in the first preferred embodiment, a movable piston (9) divides an enclosed volume (39) into a first (10a) and a second (10b) reservoir volume and transfers pressure between the two. The operational procedures are similar, however: The sequence starts as shown in **Fig.2a** where the first reservoir volume (10a) above the piston receives flue gas via a tube (7), with valve (8) in open position and valve (17) in closed position. The piston is gradually displaced downwards as the flue gas fills the first reservoir volume (10a) and gas from the second reservoir volume (10b) below the piston is released to the air via throttle valve (15). The filling of flue gas into the first reservoir volume (10a) is coordinated with release of gas through the throttle valve (15), with the valve (16) closed, and proceeds until the piston is positioned at a low level as shown in **Fig.2b.** In **Fig.2c** the throttle valve (15) is closed and valve (16) is open, admitting steam under pressure into the second reservoir volume (10b), pushing the piston (9) upwards. The valve (8) is now closed, and the flue gas in the first reservoir volume (10a) is forced via the open valve (17) into a dispersion device (18) that injects flue gas into the water (19) in a vertical column (20). **Figs.2d,2e** show the subsequent steps in the sequence of events, which correspond directly with the steps illustrated in **Figs.1d,1e** with reference to the first embodiment.

The piston shown in **Figs.2a-e** moves as a solid entity within a closed volume, where the piston edges are sealed against the sidewalls of the closed volume. An alternative solution is to replace the piston by an elastic membrane that is permanently fixed at the edges against the sidewalls of the closed volume and which can bulge into the first and second reservoir volumes in response to pressure differences between the two.

Comparing the first and second embodiments, it may be noted that the latter avoids loss of water in the form of vapour from the void space (14) during the filling of the first reservoir volume (10a) with flue gas. On the other hand, employing water as taught in the first embodiment shall in many cases allow for a simpler and more flexible system, particularly when implemented in large scale facilities.

## Claims

1. Method for separating CO2 gas from a gas mixture of CO2 and other gases, the gas mixture (1) being a flue gas, using a first (6, 10A) and a second (11, 10B) closable reservoir volume separated by a pressure transfer element, and where the method comprises the following steps:

- admitting the gas mixture (1) into the first reservoir volume (6, 10A), and releasing gas from the second volume (11, 10B) in a coordinated way;
- suspending the admitting and the releasing;
- generating steam (5) under pressure by the gas mixture (1) delivering heat to water in a heat exchanger (4), and admitting it into the second reservoir volume (11, 10B);
- transmitting pressure in the second reservoir volume (11, 10B) to the first reservoir volume (6, 10A) via the pressure transfer element by a throttle valve (15) being closed and a valve (16) being open, closing a valve (8) forcing the gas mixture in the first reservoir volume (6, 10A) via an open valve (17) into a dispersion device (18) injecting the gas mixture from the first reservoir volume (6, 10A) into a volume of water (19) in a vertical column (20) with water flowing downwards, and forming bubbles (21) therein; and
- dissolving in the volume of water (19) a relatively larger proportion of $CO_2$ gas than of the other gases in the bubbles (21), transporting gas remaining in the bubbles (21) out of the volume water (19) by allowing the bubbles (21) floating to surface of the volume of water (19), thus separating $CO_2$ gas from the gas mixture and giving $CO_2$ enriched water.

2. Method according to one of the claims above, where the generating of steam (5) under pressure comprises exploiting thermal energy from a thermal source.

3. Method according to claim 2, where the thermal source comprises the gas mixture (1).

4. Method according to claim 3, where the generating of steam (5) comprises heating water in a heat exchanger (4) by the gas mixture (1).

5. Method according to of the claims above, further comprising passing the $CO_2$ enriched water through a turbine (24) eliciting flashing of dissolved $CO_2$ into gas phase, generating energy, and producing degassed water (28).

6. Method according claim 5, comprising collecting/removing the $CO_2$ in gas phase.

7. Method according to one of the claims 5 and 6, further comprising gathering the degassed water in a reservoir (31) and admitting the steam (5) under pressure into the reservoir (31) lifting the degassed water to a higher altitude.

8. Method according to claim 7, further comprising returning the degassed water (28) into the volume of water (19) in a closed cycle operation.

9. Method according to one of the claims 7 and 8, further comprising supplementing the degassed water (28) with a smaller portion of water to compensate for evaporation losses.

10. System for separating $CO_2$ gas from a gas mixture (1) of $CO_2$ and other gases, the gas mixture (1) being a flue gas, where the system comprises:

- a first (6, 10A) and a second (11, 10B) reservoir volume separated by a pressure transfer element arranged to transfer pressure between the first (6, 10A) and second (11, 10B) reservoir volume;
- a volume of water (19) with a surface, where the volume of water (19) is fluidly connected to the first reservoir volume (6, 10A), and where the water (19) has a higher solubility of $CO_2$ than of the other gases;
- a dispersion device (18) arranged for injecting the gas mixture (1) into the first reservoir volume (6, 10A), and a throttle valve (15) arranged for for in a coordinated way releasing gas from the second reservoir volume (11, 10B); and a heat exchanger (4) arranged for generating steam (5) under pressure by the flue gas delivering heat to water in the heat exchanger (4), and an a tube arranged for admitting the steam (5) into the second reservoir volume (11, 10B), thereby via the pressure transfer element by a throttle valve (15) being closed and a valve (16) being open, closing a valve (8) forcing the gas mixture in the first reservoir volume (6, 10A) via an open valve (17) into a dispersion device (18) injecting the gas mixture from the first reservoir volume (6, 10A) into the volume of water (19) in a vertical column (20) with water flowing downwards, the volume of water (19) being arranged for separating $CO_2$ and the other gases by a relatively larger proportion of $CO_2$ being dissolved in the water (19), and a relatively larger proportion of the other gases being transported in bubbles (21) out of the water providing $CO_2$ enriched water.

11. System according to claim 10, where the pressure transfer element comprises a hydraulic device.

12. System according to claim 11, where the hydraulic device comprises hydraulic liquid arranged in the first (6) and second (11) reservoir volumes being fluidly connected and allowing transfer of hydraulic liquid between the reservoir volumes (6, 11).

13. System according to claim 10, where the pressure transfer element divides an enclosed volume (39) into the first and second reservoir volumes (10A, 10B) and comprises a movable wall in the form of a piston or a membrane.

14. System according to one of the claims 10 to 13, further comprising a turbine (24) arranged for receiving the CO2 enriched water and eliciting flashing of dissolved CO2 into gas phase, generating energy, and producing degassed water (28).

15. System according to one of the claims 10 to 14, further comprising a reservoir (31) arranged for receiving the degassed water (28) and admitting the steam (5) under pressure into the reservoir (31) lifting degassed water to a higher altitude.

16. System according to claim 15, further comprising means for returning the degassed water into the water volume in a closed cycle operation.

17. System according to one of the claims 10 to 16, where the means for generating steam under pressure comprises a heat exchanger (4) arranged for receiving heat from the gas mixture (1).

**Patentansprüche**

1. Verfahren zum Trennen von CO2-Gas aus einem Gasgemisch aus CO2 und anderen Gasen, wobei das Gasgemisch (1) ein Rauchgas ist, unter Verwendung eines ersten (6, 10A) und eines zweiten (11, 10B) verschließbaren Behältervolumens, die durch ein Druckübertragungselement getrennt sind, und wobei das Verfahren die folgenden Schritte umfasst:

   - Einlassen des Gasgemisches (1) in das erste Behältervolumen (6, 10A) und Freisetzen von Gas aus dem zweiten Volumen (11, 10B) auf eine koordinierte Weise;
   - Aussetzen des Einlassens und des Freisetzens;
   - Erzeugen von Dampf (5) unter Druck, indem das Gasgemisch (1) Wärme an Wasser in einem Wärmetauscher (4) abgibt, und Einlassen dieses Dampfes in das zweite Behältervolumen (11, 10b);
   - Übertragen von Druck in dem zweiten Behältervolumen (11, 10B) an das erste Behältervolumen (6, 10A) über das Druckübertragungselement, durch Schließen eines Drosselventils (15) und Offenstehen eines Ventils (16), Schließen eines Ventils (8), wodurch das Gasgemisch in dem ersten Behältervolumen (6, 10A) über ein offenes Ventil (17) in eine Dispersionsvorrichtung (18) gedrückt wird, die das Gasgemisch aus dem ersten Behältervolumen (6, 10A) in ein Volumen von Wasser (19) in einer vertikalen Säule (20) einspritzt, wobei Wasser nach unten fließt und Blasen (21) darin gebildet werden; und
   - Auflösen, in dem Volumen von Wasser (19), eines relativ größeren Anteils an CO2-Gas als der anderen Gase in den Blasen (21), Transportieren von Gas, das in den Blasen (21) übrig bleibt, aus dem Volumen von Wasser (19), indem den Blasen (21) erlaubt wird, an die Oberfläche des Volumens von Wasser (19) zu aufsteigen, wodurch CO2-Gas von dem Gasgemisch getrennt und CO2-angereichertes Wasser erhalten wird.

2. Verfahren nach einem der obigen Ansprüche, wobei das Erzeugen von Dampf (5) unter Druck Ausnutzen von Wärmeenergie aus einer Wärmequelle umfasst.

3. Verfahren nach Anspruch 2, wobei die Wärmequelle das Gasgemisch (1) umfasst.

4. Verfahren nach Anspruch 3, wobei das Erzeugen von Dampf (5) Erwärmen von Wasser in einem Wärmetauscher (4) durch das Gasgemisch (1) umfasst.

5. Verfahren nach einem der obigen Ansprüche, ferner umfassend Leiten des mit CO2 angereicherten Wassers durch eine Turbine (24), die schnelles Verdampfen von gelöstem CO2 in Gasphase auslöst, Energie erzeugt und entgastes Wasser (28) produziert.

6. Verfahren nach Anspruch 5, umfassend Sammeln/Entfernen des CO2 in Gasphase.

7. Verfahren nach einem der Ansprüche 5 und 6, ferner umfassend Zusammenziehen des entgasten Wassers in einem Behälter (31) und Einlassen des Dampfes (5) unter Druck in den Behälter (31), wodurch das entgaste Wasser auf eine größere Höhe gehoben wird.

8. Verfahren nach Anspruch 7, ferner umfassend Rückführen des entgasten Wassers (28) in das Volumen von Wasser (19) in einem geschlossenen Zyklusbetrieb.

9. Verfahren nach einem der Ansprüche 7 und 8, ferner umfassend Ergänzen des entgasten Wassers (28) mit einem kleineren Anteil an Wasser, um Verdunstungsverluste zu kompensieren.

10. System zum Trennen von CO2-Gas aus einem Gasgemisch (1) aus CO2 und anderen Gasen, wobei das Gasgemisch (1) ein Rauchgas ist, wobei das System Folgendes umfasst:

   - ein erstes (6, 10A) und ein zweites (11, 10B) Behältervolumen, die durch ein Druckübertragungselement getrennt sind, das angeordnet ist, um Druck zwischen dem ersten (6, 10A) und dem zweiten (11, 10B) Behältervolumen zu übertragen;
   - ein Volumen von Wasser (19) mit einer Oberfläche, wobei das Volumen von Wasser (19) in Fluidverbindung mit dem ersten Behältervolumen (6, 10A) steht und wobei das Wasser (19) eine höhere Löslichkeit von CO2 als der anderen Gase aufweist;
   - eine Dispersionsvorrichtung (18), die zum Einspritzen des Gasgemisches (1) in das erste Behältervolumen (6, 10A) angeordnet ist, und ein Drosselventil (15), das zum Freisetzen von Gas aus dem zweiten Behältervolumen (11, 10B) auf eine koordinierte Weise angeordnet ist; und einen Wärmetauscher (4), der zum Erzeugen von Dampf (5) unter Druck angeordnet ist, indem das Rauchgas Wärme an Wasser in dem Wärmetauscher (4) abgibt, und ein Rohr, das zum Einlassen des Dampfes (5) in das zweite Behältervolumen (11, 10B) angeordnet ist, wodurch über das Druckübertragungselement durch Schließen eines Drosselventils (15) und Offenstehen eines Ventils (16) ein Ventil (8) geschlossen wird, welches das Gasgemisch in dem ersten Behältervolumen (6, 10A) über ein offenes Ventil (17) in eine Dispersionsvorrichtung (18) drückt, die das Gasgemisch aus dem ersten Behältervolumen (6, 10A) in das Volumen von Wasser (19) in einer vertikalen Säule (20) einspritzt, wobei Wasser nach unten fließt, wobei das Volumen von Wasser (19) zum Trennen von CO2 und den anderen Gasen dadurch, dass ein relativ größerer Anteil an CO2 in dem Wasser (19) gelöst wird, und ein relativ größerer Anteil der anderen Gase in Blasen (21) aus dem Wasser transportiert wird, angeordnet ist, wodurch CO2-angereichertes Wasser bereitgestellt wird.

11. System nach Anspruch 10, wobei das Druckübertragungselement eine hydraulische Vorrichtung umfasst.

12. System nach Anspruch 11, wobei die Hydraulikvorrichtung Hydraulikflüssigkeit umfasst, die in dem ersten (6) und dem zweiten (11) Behältervolumen angeordnet ist, die in Fluidverbindung stehen und Übertragung von Hydraulikflüssigkeit zwischen den Behältervolumen (6, 11) ermöglichen.

13. System nach Anspruch 10, wobei das Druckübertragungselement ein eingeschlossenes Volumen (39) in das erste und das zweite Behältervolumen (10A, 10B) unterteilt und eine bewegbare Wand in der Form eines Kolbens oder einer Membran umfasst.

14. System nach einem der Ansprüche 10 bis 13, ferner umfassend eine Turbine (24), die zum Aufnehmen des mit CO2 angereicherten Wassers und Auslösen von schnellem Verdampfen von gelöstem CO2 in Gasphase, Erzeugen von Energie und Produzieren von entgastem Wasser (28) angeordnet ist.

15. System nach einem der Ansprüche 10 bis 14, ferner umfassend einen Behälter (31), der zum Aufnehmen des entgasten Wassers (28) und Einlassen des Dampfes (5) unter Druck in den Behälter (31) angeordnet ist, wodurch entgastes Wasser auf eine größere Höhe angehoben wird.

16. System nach Anspruch 15, ferner umfassend Mittel zum Rückführen des entgasten Wassers in das Wasservolumen in einem geschlossenen Zyklusbetrieb.

17. System nach einem der Ansprüche 10 bis 16, wobei das Mittel zum Erzeugen von Dampf unter Druck einen Wärmetauscher (4) umfasst, der zum Aufnehmen von Wärme aus dem Gasgemisch (1) angeordnet ist.

## Revendications

1. Procédé permettant la séparation du CO2 gazeux d'un mélange gazeux de CO2 et d'autres gaz, le mélange gazeux (1) étant un gaz de combustion, à l'aide d'un premier (6, 10A) et d'un second (11, 10B) volume de réservoir pouvant être fermé, séparés par un élément de transfert de pression, et où le procédé comprend les étapes suivantes :

   - admission du mélange gazeux (1) dans le premier volume de réservoir (6, 10A) et libération du gaz du second volume (11, 10B) de manière coordonnée ;
   - suspension de l'admission et de la libération ;
   - génération de la vapeur (5) sous pression par le mélange gazeux (1) fournissant de la chaleur à l'eau dans un échangeur de chaleur (4) et admission de celle-ci dans le second volume de réservoir (11, 10B) ;
   - transmission de la pression dans le second volume de réservoir (11, 10B) au premier volume de réservoir (6, 10A) par l'intermédiaire de l'élément de transfert de pression par une soupape d'étranglement (15) qui est fermée et une soupape (16) qui est ouverte, fermeture d'une soupape (8) forçant le mélange gazeux, présent dans le premier volume de réservoir (6, 10A), par l'intermédiaire d'une soupape ouverte (17) dans un dispositif de dispersion (18) injectant le mélange gazeux du premier volume de réservoir (6, 10A) dans un volume d'eau (19) dans une colonne verticale (20) avec de l'eau s'écoulant vers le bas et formation de bulles (21) dans celle-ci ; et
   - dissolution dans le volume d'eau (19) d'une proportion relativement plus importante de CO2 gazeux que des autres gaz dans les bulles (21), transport du gaz restant dans les bulles (21) hors du volume d'eau (19) en laissant les bulles (21) flotter à la surface du volume d'eau (19), séparant ainsi le CO2 gazeux du mélange gazeux et donnant de l'eau enrichie en CO2.

2. Procédé selon l'une des revendications susmentionnées, où la génération de vapeur (5) sous pression comprend l'exploitation de l'énergie thermique provenant d'une source thermique.

3. Procédé selon la revendication 2, où la source thermique comprend le mélange gazeux (1).

4. Procédé selon la revendication 3, ladite génération de vapeur (5) comprenant le chauffage de l'eau dans un échangeur de chaleur (4) par le mélange gazeux (1).

5. Procédé selon l'une des revendications susmentionnées, comprenant en outre le passage de l'eau enrichie en CO2 à travers une turbine (24) entraînant une vaporisation instantanée du CO2 dissous en phase gazeuse, la génération d'énergie et la production d'eau dégazée (28).

6. Procédé selon la revendication 5, comprenant la collecte/l'élimination du CO2 en phase gazeuse.

7. Procédé selon l'une des revendications 5 et 6, comprenant en outre la récupération de l'eau dégazée dans un réservoir (31) et l'admission de la vapeur (5) sous pression dans le réservoir (31) en soulevant l'eau dégazée à une altitude plus élevée.

8. Procédé selon la revendication 7, comprenant en outre le retour de l'eau dégazée (28) dans le volume d'eau (19) dans une opération en cycle fermé.

9. Procédé selon l'une des revendications 7 et 8, comprenant en outre l'ajout d'une plus petite quantité d'eau à l'eau dégazée (28) pour compenser les pertes par évaporation.

10. Système destiné à la séparation du CO2 gazeux d'un mélange gazeux (1) de CO2 et d'autres gaz, le mélange gazeux (1) étant un gaz de combustion, où le système comprend :

    - un premier (6, 10A) et un second (11, 10B) volume de réservoir séparés par un élément de transfert de pression agencé pour transférer la pression entre le premier (6, 10A) et le second (11, 10B) volume de réservoir ;
    - un volume d'eau (19) avec une surface, où le volume d'eau (19) est raccordé de manière fluidique au premier volume de réservoir (6, 10A), et où l'eau (19) possède une solubilité plus élevée du CO2 que des autres gaz ;
    - un dispositif de dispersion (18) agencé pour injecter le mélange gazeux (1) dans le premier volume de réservoir (6, 10A), et une soupape d'étranglement (15) agencée pour libérer de manière coordonnée le gaz du second volume de réservoir (11, 10B) ; et un échangeur de chaleur (4) agencé pour générer de la vapeur (5) sous pression par le gaz de combustion fournissant de la chaleur à l'eau dans l'échangeur de chaleur (4), et un tube agencé pour admettre la vapeur (5) dans le second volume de réservoir (11, 10B), ainsi par l'intermédiaire de l'élément de transfert de pression par une soupape d'étranglement (15) qui est fermée et une soupape (16) qui est ouverte, la fermeture d'une soupape (8) forçant le mélange gazeux dans le premier volume de réservoir (6, 10A) par l'intermédiaire d'une soupape ouverte (17) dans un dispositif de dispersion (18) injectant le mélange gazeux du premier volume de réservoir (6, 10A) dans le volume d'eau (19) dans une colonne verticale (20) avec de l'eau s'écoulant vers le bas, le volume d'eau (19) étant agencé pour séparer le CO2 et les autres gaz par une proportion relativement plus grande de CO2 dissous dans l'eau (19) et une proportion relativement plus grande des autres gaz transportée dans des bulles (21) hors de l'eau fournissant de l'eau enrichie en CO2.

11. Système selon la revendication 10, où l'élément de transfert de pression comprend un dispositif hydraulique.

12. Système selon la revendication 11, où le dispositif hydraulique comprend un liquide hydraulique agencé dans les premier (6) et second (11) volumes de réservoir qui sont en raccordés de manière fluidique et permettent le transfert de liquide hydraulique entre les volumes de réservoir (6, 11).

13. Système selon la revendication 10, où l'élément de transfert de pression divise un volume fermé (39) en les premier et second volumes de réservoir (10A, 10B) et comprend une paroi mobile sous la forme d'un piston ou d'une membrane.

14. Système selon l'une des revendications 10 à 13, comprenant en outre une turbine (24) agencée pour recevoir l'eau enrichie en CO2 et entraîner une vaporisation instantanée du CO2 dissous en phase gazeuse, générer de l'énergie et produire de l'eau dégazée (28).

15. Système selon l'une des revendications 10 à 14, comprenant en outre un réservoir (31) agencé pour recevoir l'eau dégazée (28) et admettre la vapeur (5) sous pression dans le réservoir (31) soulevant l'eau dégazée à une altitude plus élevée.

16. Système selon la revendication 15, comprenant en outre des moyens pour renvoyer l'eau dégazée dans le volume d'eau dans une opération en cycle fermé.

17. Système selon l'une des revendications 10 à 16, où le moyen pour générer de la vapeur sous pression comprend un échangeur de chaleur (4) agencé pour recevoir de la chaleur en provenance du mélange gazeux (1).

Fig. 1a

Fig. 1b

Fig. 1c

Fig. 1d

Fig. 1e

Fig. 2a

Fig. 2b

Fig. 2c

Fig. 2d

Fig. 2e

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 20160035791 A
- EP 2928585 B1